# EUROPÄISCHE PATENTSCHRIFT

(11) **EP 0 826 690 B1**
(45) Veröffentlichungstag und Bekanntmachung des Hinweises auf die Patenterteilung: **14.11.2001**
(21) Anmeldenummer: 97114243.5
(22) Anmeldetag: 18.08.1997
(51) Int. Cl.: C07F 9/32, C07F 9/6571

(54) **Verfahren zur Herstellung von 2-Cyanoethyl-phosphinsäureestern**
Process for the preparation of 2-cyanoethyl-phosphinic acid esters
Procédé de préparation d'esters d'acides 2-cyanoéthylphosphiniques

(30) Priorität: 28.08.1996 DE 19634706
(43) Veröffentlichungstag der Anmeldung: 04.03.1998
(73) Patentinhaber: Ticona GmbH, 65451 Kelsterbach (DE)
(72) Erfinder: Kleiner, Hanss-Jerg, Dr., 61476 Kronberg (DE)

(56) Entgegenhaltungen:
- EP-A- 0 319 479
- EP-A- 0 463 560
- WOLFGANG FROESTL: "Phosphinic acid analogues of GABA." JOURNAL OF MEDICINAL CHEMISTRY., Bd. 38, Nr. 17, 1995, WASHINGTON US, Seiten 3297-3312, XP002043375

## Beschreibung

Die Erfindung betrifft ein Verfahren zur Herstellung von 2-Cyanoethylphosphinsäureestern.

2-Cyanoethylphosphinsäureester sind wertvolle Zwischenprodukte zur Herstellung von GABA_{B} Antagonisten (siehe EP-PS 319 479, EP-PS 319 482, Beispiele 5, 6, 7, 8, EP-OS 463 560, Beispiel 3). Ihre Herstellung erfolgt durch Anlagerung von Acrylnitril an Phosphonigsäuremonoester. Die Anlagerung erfolgt mit Hilfe von Alkalialkoholaten. Dabei werden die beiden Komponenten bei Raumtemperatur gemischt und in diese Mischung die Katalysatorlösung gegeben. Die Reaktion ist dann exotherm (Beispiel 5: Temperatur steigt bis 100°C). Aus sicherheitstechnischen Gründen ist diese Herstellmethode für großtechnische Zwecke nicht zu verwenden.

Es bestand daher der Bedarf, ein Verfahren zu entwickeln, das die vorstehend genannten Nachteile vermeidet, sich technisch ohne großen Aufwand realisieren läßt und darüber hinaus die gewünschten Produkte sowohl in hoher Ausbeute als auch in hoher Reinheit zugänglich macht.

Diese Aufgabe wird gelöst durch ein Verfahren zur Herstellung phosphorhaltiger Verbindungen der Formel (I) 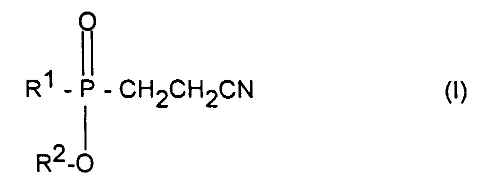 worin R¹ und R² gleich oder verschieden sind und für einen geradkettigen oder verzweigten Alkylrest mit 1 bis 8 Kohlenstoffatomen, einen Cyclohexyl-, einen Cyclopentyl-, einen Aryl-, einen halogen-, (C₁-C₆)-alkyl- oder (C₁-C₆)-alkoxysubstituierten Arylrest stehen, wobei R¹ und R² zusammen mit dem Phosphoratom und dem Sauerstoffatom auch einen Ring, insbesondere einen Oxaphosphorinring, bilden können, dadurch gekennzeichnet, daß man in eine Verbindung der Formel (II) 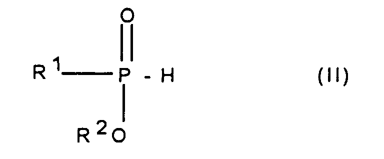 worin R¹ und R² die obengenannte Bedeutung haben, Acrylnitril bei erhöhter Temperatur eindosiert.

Überraschenderweise verläuft die Anlagerung des Acrylnitrils ohne Verwendung eines Katalysators. Weiterhin ist es überraschend, daß bei den hohen Temperaturen der Umsetzung nicht oder nur in geringem Umfange Polymerisation oder Telomerisation des Acrylnitrils erfolgt, wie sie z.B. in Gegenwart von Peroxiden bei 85°C beschrieben ist (US-PS 2 957 931, Beispiel 55).

Wichtig ist das Verfahren zum Beispiel zur Umsetzung folgender Ausgangsstoffe der allgemeinen Formel (II) Methanphosphonigsäuremonoethylester, Methanphosphonigsäuremonobutylester, Methanphosphonigsäuremonoamylester, Phenylphosphonigsäuremonoethylester, Phenylphosphonigsäuremonobutylester, 6H-Dibenz-[c,e][1,2]-oxaphosphorin-6-on. Derartige Phosphonigsäuremonoester können z.B. nach dem Verfahren der DE 19 604 195 hergestellt werden.

Das Verfahren wird vorteilhaft so durchgeführt, daß bei 130 - 250°C, insbesondere 140 - 180°C, besonders bevorzugt 155 - 170°C Acrylnitril unter Inertgasatmosphäre in die Ausgangsstoffe der allgemeinen Formel (II) eindosiert wird. Die Eindosierung erfolgt über einen Zeitraum von 4 bis 20 Stunden. Das Molverhältnis Acrylnitril zu Ausgangsstoff der allgemeinen Formel (II) beträgt vorteilhaft 0,4 : 1 bis 1:1, bevorzugt 0,5:1 bis 0,8:1. Die gegebenenfalls vorhandenen Überschüsse an den Ausgangsstoffen der allgemeinen Formel (II) können häufig durch Destillation abgetrennt werden. Die verbleibenden Rohprodukte sind für manche Umsetzungen genügend rein. Gegebenenfalls kann eine Reinigung durch die bekannten Verfahren der Destillation oder Kristallisation erfolgen.

### Beispiel 1

In 324 g (3,0 Mol) Methanphosphonigsäure-monoethylester werden unter lebhaftem Rühren und unter Inertgasatmosphäre 120 g (2,26 Mol) Acrylnitril bei 160°C in 12 Stunden zugetropft. Dann wird bei 0,4 mbar der überschüssige Monoester abdestilliert. Der Rückstand wird mit Hilfe einer Vigreux-Kolonne bei 142 - 143°C bei 0,4 mbar destilliert. Man erhält 330 g 2-Cyanoethyl-methylphosphinsäure-ethylester (Brechungsindex n_{D}²²: 1,4554). Das entspricht einer Ausbeute von 90 % d.Th..

### Beispiel 2

108 g (0,5 Mol) 6H-Dibenz-[c,e][1,2]-oxaphosphorin-6-on werden auf 165°C unter Rühren und unter Inertgasatmosphäre erhitzt und 26,5 g (0,5 Mol) Acrylnitril 4 Stunden eingetropft. Eine Stunde wird bei dieser Temperatur nachgerührt und dann abgekühlt. Man erhält 134 g einer harzartigen Masse. Digerieren mit wenig Acetonitril ergibt 130 g 6-(2-Cyanoethyl)-(6H)-dibenz[c,e][1,2]-oxaphosphorin-6-oxid, nach Umkristallisation aus wenig Acetonitril mit einem Schmelzpunkt von 120 - 123°C. Die Ausbeute beträgt 97 % d.Th..

| C₁₅H₁₂NO₂P (269) | | | | |
|---|---|---|---|---|
| ber.: | 66,92 % C | 4,46 % H | 5,20 % N | 11,5 % P |
| gef.: | 66,8 % C | 4,0 % H | 5,2 % N | 11,5 % P |

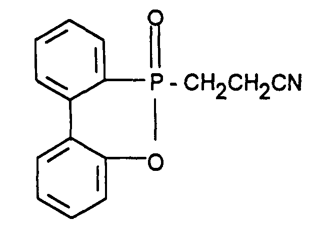

### Beispiel 3

408 g (3,0 Mol) Methanphosphonigsäuremono-n-butylester werden unter lebhaftem Rühren und unter Inertgasatmosphäre auf 165°C erhitzt und 106 g (2,0 Mol) Acrylnitril im Laufe von 12 Stunden eingetropft, eine Stunde wird nachgerührt. Dann wird abgekühlt und bei 0,3 mbar andestilliert bis zu einer Innentemperatur von 130°C. Der Rückstand wird bei einer Badtemperatur von 155°C und 0,2 mbar über einen Dünnschichtverdampfer destilliert. Man erhält 302 g 2-Cyanoethylmethylphosphinsäure-n-butylester mit einer 96 %igen Reinheit. Das entspricht einer Ausbeute von 80 % d.Th..

## Patentansprüche

1. Verfahren zur Herstellung phosphorhaltiger Verbindungen der Formel (I) 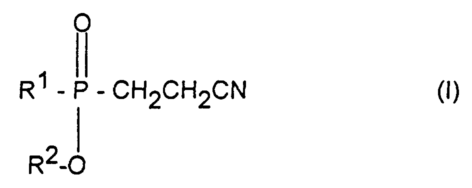 worin R¹ und R² gleich oder verschieden sind und für einen geradkettigen oder verzweigten Alkylrest mit 1 bis 8 Kohlenstoffatomen, einen Cyclohexyl-, einen Cyclopentyl-, einen Aryl-, einen halogen-, (C₁-C₆)-alkyl- oder (C₁-C₆)-alkoxysubstituierten Arylrest stehen, wobei R¹ und R² zusammen mit dem Phosphoratom und dem Sauerstoffatom auch einen Ring, insbesondere einen Oxaphosphorinring, bilden können, **dadurch gekennzeichnet, daß** man in eine Verbindung der Formel (II) 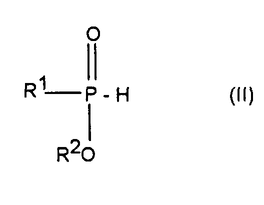 worin R¹ und R² die obengenannte Bedeutung haben, Acrylnitril bei erhöhter Temperatur eindosiert.

2. Verfahren nach Anspruch 1, **dadurch gekennzeichnet, daß** als Ausgangsstoff der Formel (II) Methanphosphonigsäuremonoethylester, Methanphosphonigsäuremonobutylester, Methanphosphonigsäuremonoamylester, Phenylphosphonigsäuremonoethylester, Phenylphosphonigsäuremonobutylester, 6H-Dibenz-[c,e][1,2]-oxaphosphorin-6-on eingesetzt wird.

3. Verfahren nach Anspruch 1 oder 2, **dadurch gekennzeichnet, daß** das Acrylnitril bei 130 bis 250°C, insbesondere 140 bis 180°C, bevorzugt 155 bis 170°C eindosiert wird.

4. Verfahren nach Anspruch 1 bis 3, **dadurch gekennzeichnet, daß** das Molverhältnis von Acrylnitril zu Ausgangsstoff der Formel (II) 0,4:1 bis 1:1, insbesondere 0,5:1 bis 0,8:1 beträgt.

5. Verfahren nach Anspruch 1 bis 4, **dadurch gekennzeichnet, daß** die Eindosierung in einem Zeitraum von 4 bis 20 Stunden erfolgt.

## Claims

1. A process for the preparation of phosphorus-containing compounds of the formula (I) 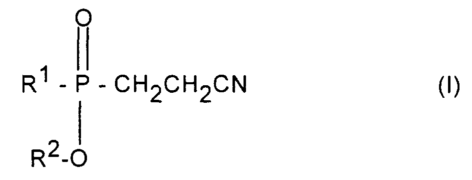 where R¹ and R² are identical or different and are a straight-chain or branched alkyl radical having 1 to 8 carbon atoms, a cyclohexyl-, cyclopentyl-, aryl-, halogen-, (C₁-C₆)-alkyl- or (C₁-C₆)-alkoxy-substituted aryl radical, where R¹ and R², together with the phosphorus atom and the oxygen atom, can also form a ring, in particular an oxaphosphorin ring, which comprises metering acrylonitrile at elevated temperature into a compound of the formula (II) 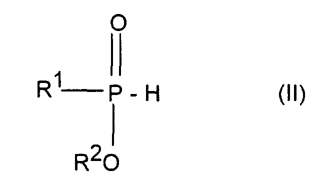 where R¹ and R² are as defined above.

2. The process as claimed in claim 1, wherein the starting material of the formula (II) is monoethyl methanephosphinate, monobutyl methanephosphinate, monoamyl methanephosphinate, monoethyl phenylphosphinate, monobutyl phenylphosphinate or 6H-dibenz-[c,e][1,2]-oxaphosphorin-6-one.

3. The process as claimed in claim 1 or 2, wherein the acrylonitrile is metered in at from 130 to 250°C, in particular from 140 to 180°C, preferably from 155 to 170°C.

4. The process as claimed in one of claims 1 to 3, wherein the molar ratio of acrylonitrile to starting material of the formula (II) is from 0.4:1 to 1:1, in particular from 0.5:1 to 0.8:1.

5. The process as claimed in one of claims 1 to 4, wherein the metering-in is carried out over a period of from 4 to 20 hours.

## Revendications

1. Procédé pour la préparation de composés phosphorés de formule (I) 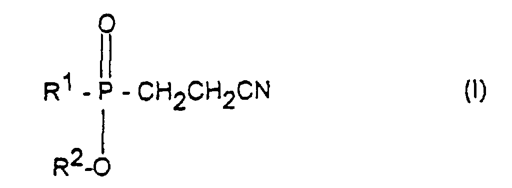 dans laquelle R¹ et R² sont identiques ou différents, et représentent un radical alkyle à chaîne droite ou ramifié, ayant de 1 à 8 atomes de carbone, un radical cyclohexyle, cyclopentyle, aryle, un radical aryle substitué par un atome d'halogène ou par un groupe alkyle en C₁-C₆ ou alcoxy en C₁-C₆, R¹ et R² pouvant également former ensemble, avec l'atome de phosphore et l'atome d'oxygène, un cycle, en particulier un cycle oxaphosphorine, **caractérisé en ce qu'**on introduit de façon réglée à une température plus élevée de l'acrylonitrile dans un composé de formule (II) 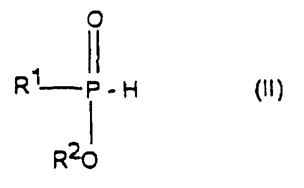 dans laquelle R¹ et R² ont les significations données plus haut.

2. Procédé selon la revendication 1, **caractérisé en ce qu'**on utilise comme produit de départ de formule (II) l'ester monoéthylique d'acide méthanephosphoneux, l'ester monobutylique d'acide méthanephosphoneux l'ester monoamylique d'acide méthanephosphoneux, l'ester monoéthylique d'acide phénylphosphoneux, l'ester monobutylique d'acide phénylphosphoneux, la 6H-dibenz-[c,e][1,2]oxaphosphorin-6-one.

3. Procédé selon la revendication 1 ou 2, **caractérisé en ce qu'**on introduit de façon réglée l'acrylonitrile à 130-250°C, en particulier à 140-180°C, de préférence à 155-170°C.

4. Procédé selon l'une quelconque des revendications 1 à 3, **caractérisé en ce que** le rapport molaire de l'acrylonitrile au produit de départ de formule (II) va de 0,4:1 à 1:1, en particulier de 0,5:1 à 0,8:1.

5. Procédé selon l'une quelconque des revendications 1 à 4, **caractérisé en ce que** l'introduction réglée s'effectue pendant une durée de 4 à 20 heures.
